(19) Europäisches Patentamt
European Patent Office
Office européen des brevets

(11) Publication number: **0 293 374 B1**

(12) **EUROPEAN PATENT SPECIFICATION**

(45) Date of publication of patent specification : 02.01.92 Bulletin 92/01

(51) Int. Cl.⁵ : **C02F 3/12**

(21) Application number : **87900847.2**

(22) Date of filing : **19.01.87**

(86) International application number : **PCT/GB87/00028**

(87) International publication number : **WO 87/04423 30.07.87 Gazette 87/17**

(54) **EFFLUENT TREATMENT.**

(30) Priority : **21.01.86 GB 8601435**

(43) Date of publication of application : **07.12.88 Bulletin 88/49**

(45) Publication of the grant of the patent : **02.01.92 Bulletin 92/01**

(84) Designated Contracting States : **AT BE CH DE FR GB IT LI LU NL SE**

(56) References cited :
US-A- 3 152 983
US-A- 3 477 581
US-A- 3 650 950
US-A- 3 772 188
US-A- 4 159 944

(73) Proprietor : **RÜCKLUFT PATENT AG**
**Pilatusstrasse 64, "Zähringerhof"**
**CH-6002 Luzern (CH)**

(72) Inventor : **OLLEY, Robert**
**212 Foresters Drive**
**Wallington, Surrey SM6 9LE (GB)**

(74) Representative : **Madgwick, Paul Roland et al**
**Ladas & Parry Isartorplatz 5**
**W-8000 München 2 (DE)**

## Description

This invention relates to the treatment of waste water from an aerobic biological waste water treatment plant, the waste water including microbial cells in suspension or settling therefrom and also to mixtures of waste water with other organic liquids or solids.

In particular it relates to the problems arising from the disposal of sewage wastes, oleaginous materials and sludges from the aerobic biological waste water treatment plants such as sewage works and effluent treatment plants.

It is also known from U.S. Patent Specification No. 4,159,944 to provide a process and method for use in waste water treatment plants in which heavy metals are separated out using cell rupture to release protoplasm to colloidal suspension which is mixed with the mainflow of secondary clarified effluent to condition the effluent for chelation treatment to remove the heavy metal ions and to effectively disinfect the effluent. The sludge product of this process is used in agricultural fertilizers and the cell rupture is aimed at improving the quality of resultant sludge.

One object of the present invention is to substantially reduce the quantity of sludge to be removed from a sewage works or effluent treatment plant.

According to one aspect of the present invention there is provided a process for reducing solid waste emitting from an aerobic biological waste water treatment plant, including subjecting waste water to aerobic biological treatment; passing at least some of the solids from the said aerobic biological treatment through cell rupture means to rupture cells of organic materials to release the contents of the cells; characterised in passing the at least some of the solids from the aerobic biological treatment through cell rupture means in the form of a colloid mill, subjecting the material which passes out from the colloid mill and which contains the ruptured cells to aerobic biological treatment, and removing purified water from the material containing the ruptured cells following aerobic biological treatment thereof.

According to another aspect of the present invention there is provided a process for reducing oleaginous material emitting from an aerobic biological waste water treatment plant, including subjecting waste water including oleaginous material to aerobic biological treatment; passing at least some of the oleaginous material from the said aerobic biological treatment through cell rupture means for dispersing the oleaginous material in the water as a substantially colloidal dispersion; characterised in passing the at least some of the oleaginous material from the aerobic biological treatment through the cell rupture means in the form of a colloid mill, subjecting the dispersion containing ruptured cells which passes out of the colloid mill to aerobic biological treatment means, and removing purified water from the dispersion containing ruptured cells following aerobic biological treatment thereof.

According to a further aspect of the present invention there is provided a process for reducing solid waste emitting from an aerobic biological waste water treatment plant, including subjecting waste water including solids and oleaginous material to aerobic biological treatment;

passing at least some of the solids from the said aerobic biological treatment means through cell rupture means to rupture cells of organic and oleaginous materials to release the contents of the cells and disperse the oleaginous material in the water as a substantially colloidal dispersion; characterised in passing the at least some of the solids from the aerobic biological treatment through the cell rupture means in the form of a colloid mill, subjecting the material passing out from the colloid mill containing the ruptured cells and colloidal dispersion to aerobic biological treatment, and removing purified water from the material containing the ruptured cells following aerobic biological treatment thereof.

Advantageously, the apparatus necessarily required for waste water treatment is substantially simplified and the addition of inorganic feeding chemicals by recirculation of chemicals already present is reduced.

Moreover, the contamination of land as a result of having to dispose of large quantities of sludge is substantially reduced or eliminated and oleaginous materials such as fats, oils and greases are put into a form suitable for treatment in standard effluent treating systems.

In carrying the invention into effect the waste water containing either settled solid material or solid material in suspension from the aeration process normally used in waste water treatment, is passed through the colloid mill containing finely separated counter-rotating discs which subjects the water and its contents to considerable shearing action as the water passes between the discs. The shearing action causes the cells of the microbial organic material to disintegrate and release their enzymes into the fluid phase. The activity of the resulting fluid is thus considerably enhanced so that the subsequent treatment plant to provide oxygen to oxidise the material to carbon dioxide and water is substantially reduced. Investigations indicate that treating a suspension of waste sludge in a domestic sewage plant to reduce its quantity by conventional means would increase the size of the plant by 40% to 60% with a considerable increase in capital cost whereas the present invention will reduce the increase in size to less than 20%. The invention can also be used on non cell-like organic materials like fats, oils and greases. By subjecting these to intense shearing action they can be emulsified into the water and be treated by the usual aeration type sewage treatment plant. There are many ways in which the subsequent dispersion from the colloid mill can be oxygenated such as air injection, trickling filters, rotary contactors and the like. Any or all of these may be used separately or in combination to achieve the desired result.

The invention may be more particularly described in the case of a domestic sewage works. After the incoming fluid has been treated to remove the larger particulate matter, the resultant liquid is subjected to a settling process from which the supernatant liquid is conveyed to tanks or filters through which air is passed and the resultant liquid is allowed to settle. According to the invention the settled sludge is passed then through a colloid mill or mills to disrupt the cellular material and either passed back through the first part of the aeration process or through a subsequent aeration system. Further settling of sludge may take place either in the existing settling system or an additional system depending on the precise plant arrangement and the settled sludge added to the sludge obtained earlier. Such recirculation of the sludge will eventually and economically lead to a substantial reduction in the quantity of sludge finally produced. In the case of a plant for treating an oleaginous waste it is also necessary to provide a suitable emulsifying unit prior to the liquid entering the first aeration chamber and it is possible for the sludge produced in such a system to be treated either in an another colloid mill or alternatively returned for treatment in the aforesaid emulsifying unit placed at the commencement of the process.

**Claims**

1. A process for reducing solid waste emitting from an aerobic biological waste water treatment plant, including subjecting waste water to aerobic biological treatment; passing at least some of the solids from the said aerobic biological treatment through cell rupture means to rupture cells of organic materials to release the contents of the cells; characterised in passing the at least some of the solids from the aerobic biological treatment through cell rupture means in the form of a colloid mill, subjecting the material which passes out from the colloid mill and which contains the ruptured cells to aerobic biological treatment, and removing purified water from the material containing the ruptured cells following aerobic biological treatment thereof.

2. A process for reducing oleaginous material emitting from an aerobic biological waste water treatment plant, including subjecting waste water including oleaginous material to aerobic biological treatment; passing at least some of the oleaginous material from the said aerobic biological treatment through cell rupture means for dispersing the oleaginous material in the water as a substantially colloidal dispersion;

characterised in passing the at least some of the oleaginous material from the aerobic biological treatment through the cell rupture means in the form of a colloid mill, subjecting the dispersion containing ruptured cells which passes out of the colloid mill to aerobic biological treatment means, and removing purified water from the dispersion containing ruptured cells following aerobic biological treatment thereof.

3. A process for reducing solid waste emitting from an aerobic biological waste water treatment plant, including subjecting waste water including solids and oleaginous material to aerobic biological treatment; passing at least some of the solids from the said aerobic biological treatment means through cell rupture means to rupture cells of organic and oleaginous materials to release the contents of the cells and disperse the oleaginous material in the water as a substantially colloidal dispersion;
characterised in passing the at least some of the solids from the aerobic biological treatment through the cell rupture means in the form of a colloid mill, subjecting the material grassing out from the colloid mill containing the ruptured cells and colloidal dispersion to aerobic biological treatment, and removing purified water from the material containing the rupture cells following aerobic biological treatment thereof.

4. A process as claimed in any one of the preceding claims, characterised in feeding at least some of the material following cell rupture from the colloid mill to aerobic biological treatment means which feeds the colloid mill.

5. A process as claimed in any one of claims 1 to 3, characterised in feeding at least some of the material following the cell rupture from the colloid mill to aerobic biological treatment means which is additional to and independent of the said aerobic biological treatment means which is arranged to feed the said colloid mill.

**Patentansprüche**

1. Verfahren zum Vermindern der Menge an festen Abfallstoffen, die aus einer Anlage zur aeroben biologischen Behandlung von Abwasser ausgebracht werden, wobei Abwasser einer aeroben biologischen Behandlung unterworfen und mindestens ein Teil der bei der aeroben biologischen Behandlung anfallenden Feststoffe durch eine Zellenzerreißeinrichtung geführt wird, in der aus organischen Substanzen bestehende Zellen zerrissen werden, so daß der Inhalt der Zellen freigesetzt wird, dadurch gekennzeichnet, daß mindestens ein Teil der bei der aeroben biologischen Behandlung anfallenden Feststoffe durch eine Zellenzerreißeinrichtung in Form einer Kolloidmühle geführt werden, das aus der Kolloidmühle austretende, die zerrissenen Zellen enthaltende Gut einer aeroben biologischen Behandlung unterworfen wird und nach der aeroben biologischen Behandlung dieses Gutes Wasser von dem die zerrissenen Zellen enthaltenden Gut entfernt wird.

2. Verfahren zum Vermindern der Menge an ölartigem oder ölhaltigem Material, das aus einer Anlage zur aeroben biologischen Behandlung von Abwasser ausgebracht wird, wobei ölartiges oder ölhaltiges Material enthaltendes Abwasser einer aeroben biologischen Behandlung unterworfen wird, mindestens ein Teil des bei der aeroben biologischen Behandlung anfallenden ölartigen oder ölhaltigen Materials durch eine Zellenzerreißeinrichtung geführt und das örlartige oder ölhaltige Material in dem Wasser unter Bildung einer im wesentlichen kolloiden Dispersion dispergiert wird, dadurch gekennzeichnet, daß mindestens ein Teil des bei der aeroben biologischen Behandlung anfallenden ölartigen oder ölhaltigen materials durch eine Zellenzerreißeinrichtung in Form einer Kolloidmühle geführt wird, die aus der Kolloidmühle austretende, zerrissene Zellen enthaltende Dispersion einer aeroben biologischen behandlung unterworfen wird und von der zerrissene Zellen enthaltenden Dispersion nach deren aerober biologischer Behandlung gereinigtes Wasser entfernt wird.

3. Verfahren zum Vermindern der Menge an festen Abfallstoffen, die aus einer Anlage zur aeroben biologischen Behandlung von Abwasser ausgebracht werden, wobei ein Feststoffe und ölartiges oder ölhaltiges Material enthaltendes Abwasser einer aeroben biologischen Behandlung unterworfen und mindestens ein Teil der aus der Anlage zur aeroben biologischen Behandlung von Abwasser ausgebrachten Feststoffe durch eine Zellenzerreißeinrichtung geführt wird, in der Zellen aus organischen und aus ölartigem oder ölhaltigem Material zerrissen werden, um den Inhalt dieser Zellen Freizusetzen und das ölartige oder ölhaltige Material in dem Wasser unter Bildung einer im wesentlichen kolloiden Dispersion freizusetzen, dadurch gekenzeichnet, daß mindestens ein Teil der bei der aeroben biologischen Behandlung anfallenden Feststoffe durch eine Zellenzeireißeinrichtung in Form einer Kolloidmühle geführt wird, das aus der Kolloidmühle austretende und die zerrissenen Zellen und die kolloide Dispersion enthaltende Gut einer aeroben biologischen Behandlung unterworfen wird und nach der aeroben biologischen Behandlung des die zerrissenen Zellen enthaltenden Gutes gereinigtes Wasser von diesem Gut entfernt wird.

4. Verfahren nach einem der vorhergehenden Ansprüche, dadurch gekennzeichnet, daß nach dem Zerreißen der Zellen mindestens ein Teil des Materials von der Kolloidmühle der die Kolloidmühle speisenden Einrichtung zur aeroben biologischen Behandlung zugeführt wird.

5. Verfahren nach einem der Ansprüche 1 bis 3, dadurch gekennzeichnet, daß nach dem Zerreißen der Zellen mindestens ein Teil des Materials von der Kolloidmühle einer zur aeroben biologischen Behandlung von dienenden Einrichtung zugeführt wird, die zusätzlich zu der die Kolloidmühle speisenden zur aeroben biologischen Behandlung dienenden Einrichtung vorgesehen und von ihr unabhängig ist.

**Revendications**

1. Procédé pour réduire les déchets solides sortant d'une installation de traitement biologique aérobie d'eaux usées, qui comprend l'exécution d'un traitement biologique aérobie sur les eaux usées, le passage d'au moins une fraction des solides provenant de ce traitement biologique aérobie par un dispositif de rupture des cellules pour rompre les cellules de matières organiques en vue de dégager le contenu des cellules, caractérisé par le passage de l'au moins une fraction des solides provenant du traitement biologique aérobie dans un dispositif de rupture des cellules sous la forme d'un broyeur colloïdal, l'exécution du traitement biologique aérobie sur la matière qui sort du broyeur colloïdal et qui contient les cellules rompues, et la séparation entre l'eau purifiée et la matière contenant les cellules rompues après leur traitement biologique aérobie.

2. Procédé pour réduire la matière oléagineuse sortant d'une installation de traitement biologique aérobie d'eaux usées, qui comprend l'exécution d'un traitement biologique aérobie sur les eaux usées contenant la matière oléagineuse, le passage d'au moins une fraction de la matière oléagineuse provenant de ce traitement biologique aérobie par un dispositif de rupture des cellules pour disperser la matière oléagineuse dans l'eau à l'état de dispersion sensiblement colloïdale, caractérisé par le passage de l'au moins une fraction de la matière oléagineuse provenant du traitement biologique aérobie dans un dispositif de rupture des cellules sous la forme d'un broyeur colloïdal, l'exécution du traitement biologique aérobie sur la dispersion qui sort du broyeur colloïdal et qui contient les cellules rompues, et la séparation entre l'eau purifiée et la matière contenant les cellules rompues après leur traitement biologique aérobie.

3. Procédé pour réduire les déchets solides sortant d'une installation de traitement biologique aérobie d'eaux usées, qui comprend l'exécution d'un traitement biologique aérobie sur les eaux usées contenant des solides et de la matière oléagineuse, le passage d'au moins une fraction des solides provenant de ce traitement biologique aérobie par un dispositif de rupture des cellules pour rompre les cellules de matières organiques et oléagineuses en vue de dégager le contenu des cellules et de disperser la matière oléagineuse dans l'eau à l'état de dispersion sensiblement colloïdale, caractérisé par le passage de l'au moins une fraction des solides provenant du traitement biologique aérobie dans un dispositif de rupture des cellules sous la forme d'un broyeur colloïdal, l'exécution du traitement biologique aérobie sur la matière qui sort du broyeur colloïdal et qui contient les cellules rompues et la dispersion colloïdale, et la séparation entre l'eau purifiée et la matière contenant les cellules rompues après leur traitement biologique aérobie.

4. Procédé suivant l'une quelconque des revendications précédentes, caractérisé par l'admission d'au moins une fraction de la matière sortant du broyeur colloïdal après la rupture des cellules dans un dispositif de traitement biologique aérobie qui alimente le broyeur colloïdal.

5. Procédé suivant l'une quelconque des revendications 1 à 3, caractérisé par l'admission d'au moins une fraction de la matière sortant du broyeur colloïdal après la rupture des cellules dans un dispositif de traitement biologique aérobie qui vient en supplément et est indépendant du dispositif de traitement biologique aérobie monté pour alimenter le broyeur colloïdal.